# EUROPÄISCHE PATENTSCHRIFT

(11) **EP 3 899 430 B1**
(45) Veröffentlichungstag und Bekanntmachung des Hinweises auf die Patenterteilung: **25.09.2024**
(21) Anmeldenummer: 19832582.1
(22) Anmeldetag: 12.12.2019
(51) Int. Cl.: G01C 21/34

(54) **VERFAHREN ZUM NAVIGIEREN EINES FAHRZEUGES**
METHOD FOR VEHICLE NAVIGATION
PROCÉDÉ DE NAVIGATION D'UN VÉHICULE

(30) Priorität: 20.12.2018 DE 102018009904
(43) Veröffentlichungstag der Anmeldung: 27.10.2021
(73) Patentinhaber: VOLKSWAGEN AKTIENGESELLSCHAFT, 38440 Wolfsburg (DE)
(72) Erfinder: STRYGULEC, Sarah, 42105 Wuppertal (DE); NOWAK, Bianca, 44577 Castrop-Rauxel (DE)
(86) Internationale Anmeldenummer: PCT/EP2019/084997
(87) Internationale Veröffentlichungsnummer: WO 2020/126862

(56) Entgegenhaltungen:
- WO-A1-2016/150494
- DE-A1- 102015 212 587
- DE-A1- 102017 201 789
- US-A1- 2007 078 597
- US-A1- 2018 234 351

## Beschreibung

Die Erfindung betrifft ein Verfahren zum Navigieren eines Fahrzeuges nach dem unabhängigen Verfahrensanspruch und ein Navigationssystem nach dem unabhängigen Systemanspruch.

Mobile-Edge-Computing kann genutzt werden, um einem mobilen Endgerät neben den eigenen Rechenressourcen zusätzliche externe Rechenressourcen, die sich in der Umgebung des mobilen Endgeräts befinden, über sog. Edge-Nodes zur Verfügung zu stellen. Wenn sich das mobile Endgerät bspw. in einem Fahrzeug befindet und sich entlang einer Route fortbewegt, muss ein "Hand-over" von einem Edge-Node zu einem anderen Edge-Node erfolgen, wenn das mobile Endgerät den Einzugsbereich eines ersten Edge-Node verlässt und in den Einzugsbereich eines zweiten Edge-Node gelangt. Dabei kann es durch Störungen des Kommunikationskanals oder durch einen Mangel an verfügbaren Edge-Nodes entlang der Route zu einer Unterbrechung der Verbindung zu einem Edge-Node kommen, wodurch die zusätzlichen Rechenressourcen plötzlich wegfallen können. Anhand von Karten, die die Netzabdeckung bzw. Quality-of-Service schätzen, kann eine Vorhersage der Verfügbarkeit für Mobile-Edge-Computing getroffen werden. So sind Bereiche, in denen ein Auslagern der Rechenressourcen nur eingeschränkt oder nicht möglich ist, bereits im Vorfeld bekannt. Bei den bekannten Karten zur Schätzung der Netzabdeckung und Quality-of-Service handelt es sich jedoch um rein statische Karten. So sind zwar Bereiche, in denen Mobile-Edge-Computing kritisch sein kann, bekannt, es wird aber keine aktive Verbesserung erzielt.

Das Dokument WO2016150494 A1 offenbart ein Verfahren zum Navigieren eines Fahrzeuges in einem Straßennetzwerk, auf welchem ein Edge-Node-Netzwerk vorgesehen ist, welches mehrere stationäre Edge-Nodes umfasst.

Das Dokument DE10201701789 A1 offenbart ein Verfahren zum Austausch von Rechenleistung zwischen mobilen Edge-Nodes eines Edge-Node Netzwerks.

Die Aufgabe der Erfindung ist es daher, ein verbessertes Verfahren zum Navigieren eines Fahrzeuges bereitzustellen. Insbesondere ist es Aufgabe der Erfindung ein Verfahren zum Navigieren eines Fahrzeuges zur Verfügung zu stellen, welches eine vorteilhafte, kundenfreundliche Navigation ermöglicht, bei der ein schneller und effizienter Service zur Auslagerung von Rechenleistung bereitgestellt wird. Zudem ist es Aufgabe der Erfindung, ein verbessertes Navigationssystem bereitzustellen, bei dem die Unterbrechungen von Serviceleistungen während der Fahrt des Fahrzeuges entlang einer geplanten Route reduziert, insbesondere vorausschauend unterbunden werden können.

Die erfindungsgemäße Aufgabe wird gelöst durch ein verbessertes Verfahren zum Navigieren eines Fahrzeuges mit den Merkmalen des unabhängigen Verfahrensanspruches sowie durch ein verbessertes Navigationssystem mit den Merkmalen des unabhängigen Systemanspruches. In den abhängigen Ansprüchen sind bevorzugte Weiterbildungen der Erfindung aufgeführt.

Merkmale, die zu den einzelnen Erfindungsaspekten offenbart werden, können in der Weise miteinander kombiniert werden, dass bzgl. der Offenbarung zu den Erfindungsaspekten der Erfindung stets wechselseitig Bezug genommen wird bzw. werden kann.

Die Erfindung stellt ein Verfahren zum Navigieren eines Fahrzeuges in einem Straßennetzwerk bereit, auf welchem ein Edge-Node-Netzwerk vorgesehen ist, welches mehrere stationäre Edge-Nodes und mehrere mobile Edge-Nodes umfassen kann, wobei das Fahrzeug dazu ausgeführt ist, eine Rechenleistung an mindestens einen von den stationären Edge-Nodes und/oder von den mobilen Edge-Nodes des Edge-Node-Netzwerkes auszulagern, aufweisend folgende Schritte:
1) Vorschlagen mindestens einer Route auf dem Straßennetzwerk an einen Benutzer des Fahrzeuges,
2) Zuordnen der mindestens einen Route mindestens einer aktuellen oder prognostizierten Information über die stationären Edge-Nodes und die mobilen Edge-Nodes des Edge-Node-Netzwerks entlang der mindestens einen Route.

Unter einem Edge-Node im Sinne der Erfindung kann ein Rechenknoten eines Edge-Node-Netzwerkes verstanden werden, der über einen Prozessor, mit einer, wenn auch begrenzten Rechenleistung im Vergleich zu einer Basisstation eines Mobilfunkanbieters, und eine Kommunikationseinheit zum Austauschen von Daten mit anderen Edge-Nodes in einem Edge-Node-Netzwerk verfügt. Der Edge-Node kann mit anderen Worten ein Computer sein, der als ein Portal für die Kommunikation mit anderen Edge-Nodes des Edge-Node-Netzwerkes zwecks Datenaustausch und/oder Auslagerung von Rechenleistung und/oder Teilen von Rechenressourcen und/oder Teilen von Rechenergebnissen dienen kann. Der Edge-Node kann auch als ein Gateway-Knoten oder ein Kantenknoten im Rahmen eines Edge-Node-Netzwerkes bezeichnet werden. Über die Kommunikationseinheit kann der Edge-Node Daten von einem Endgerät, wie dem erfindungsgemäßen Fahrzeug, empfangen, die er mit der eigenen Rechenleistung auf seinem Prozessor bearbeiten kann. Die Ergebnisse der Bearbeitung kann der Edge-Node über die Kommunikationseinheit zurück an das Endgerät senden. Bei den Daten kann es sich um Sensordaten handeln, die auf dem Edge-Node ausgewertet werden können. Auch ist es denkbar, dass unterschiedliche Rechenaufgaben durch den Edge-Node übernommen werden können.

Das Fahrzeug oder einige Systeme innerhalb des Fahrzeuges können im Rahmen der Erfindung Daten an einen Edge-Node eines Edge-Node-Netzwerkes schicken, die mithilfe einer zusätzlichen Rechenleistung auf dem Edge-Node bearbeitet werden sollen, wenn bspw. eine eigene Rechenleistung im Fahrzeug nicht vorhanden ist, nicht ausreichend ist oder anderweitig benutzt wird. Dabei wird der Edge-Node aus einem Edge-Node-Netzwerk ausgewählt, der sich in der Nähe bzw. in dem Einzugsbereich des Fahrzeuges befindet. Somit können die Wartezeiten bei einer Anfrage an eine zentrale Cloud vermieden werden und die zusätzliche Rechenleistung am Rande des Netzwerkes in der Nähe des Fahrzeuges bereitgestellt werden. Auf diese Weise kann ein schneller und effizienter Service zur Auslagerung von Rechenleistung aus dem Fahrzeug bereitgestellt werden.

Unter einem mobilen Edge-Node im Sinne der Erfindung kann ein Edge-Node bezeichnet werden, der bewegt werden kann. Der mobile Edge-Node im Sinne der Erfindung befindet sich in Bewegung, während er die Rechenleistung bereitstellt. Als ein mobiler Edge-Node im Sinne der Erfindung kann ein Fahrzeug, bspw. ein Flottenfahrzeug, eine Drohne oder eine mobile Basisstation verwendet werden.

Als stationäre Edge-Nodes können im Sinne der Erfindung örtlich stationär aufgestellte Edge-Nodes, Basisstationen eines Netzwerkbetreibers und/oder eines mobilen Funkanbieters verstanden werden.

Im Rahmen der Erfindung ist es denkbar, dass die Rechenleistung, die für eine Anwendung ausgelagert wird, ganz oder nur zum Teil ausgelagert wird.

Unter prognostizierten Informationen sind prädiktive Informationen gemeint, die vorausschauend an dem jeweiligen Edge-Node vorliegen werden, wenn das Fahrzeug auf seiner Route in den Einzugsbereich des jeweiligen Edge-Nodes einfahren wird. Mit anderen Worten ist bei den prognostizierten Informationen gemeint, dass vorausberechnet wird, wann sich das Fahrzeug an welchem Punkt der Route befinden wird und welche Informationen dann an den Edge-Nodes vorliegen werden, welche zu diesem Zeitpunkt in dem Einzugsbereich des Fahrzeuges voraussichtlich liegen werden.

Der Erfindungsgedanke liegt dabei darin, dass in Abhängigkeit von den vorhandenen stationären und/oder mobilen Edge-Nodes des Edge-Node-Netzwerkes dem Benutzer des Fahrzeuges verschiedene Routen vorgeschlagen werden, die über unterschiedliche Edge-Node-Anwendungen verfügen können. Beim Vorschlagen der Routen werden erfindungsgemäß Informationen über die stationären und/oder mobilen Edge-Nodes des Edge-Node-Netzwerkes, wie z. B. Lage, Auslastung, Einzugsbereich, Rechenleistung, zeitliche Verfügbarkeit, verfügbare Rechenkapazität, Zuverlässigkeit, Wartezeit usw. berücksichtigt. Weiterhin können auch Statistiken über die Auslastung der Routen zu gewissen Zeitpunkten und/oder andere Verkehrsinformationen in die Berechnung miteinbezogen werden. Beim Vorschlagen der Routen können zudem eine verfügbare eigene Rechenleistung und/oder Sensorik im Fahrzeug berücksichtigt werden.

Somit kann der Fahrer bspw. eine Route von den vorgeschlagenen Routen wählen, die möglicherweise etwas länger dauert, aber eine geringere Auslastung der Edge Nodes aufweist, sodass ihm dort mehr Services bzw. Anwendungen über die Edge-Nodes angeboten werden können. Dies kann insbesondere für automatisch fahrende Fahrzeuge von Vorteil sein, die für die Auswertung von Sensordaten und die Berechnung von Fahrmanövern hohe Rechenleistungen benötigen. Bspw. spielt für manche Nutzer eine längere Reisedauer keine Rolle, wenn sie dafür vollautomatisiert fahren können. Aus der bereits im Fahrzeug vorhandenen Rechenleistung, der verwendeten Sensorik und den vorhandenen Daten (z. B. eigenen Sensordaten und/oder Sensordaten anderer Fahrzeuge) sowie den Informationen über die verfügbaren Edge-Nodes entlang einer Route des Fahrzeuges kann abgeleitet werden, auf welcher Route, welche konkrete Anwendungen, umfassend Automatisierungsgrade und/oder Fahrassistenzfunktionen, angeboten und genutzt werden können. Vorteilhafterweise können die Edge-Node-Abdeckung und die Auslastung des Edge-Node-Netzwerkes sowie die vorgeschlagenen Routen auf einer Karte visualisiert werden.

Für verschiedene Automatisierungsgrade und/oder weitere Anwendungen (beispielsweise Automatisierungsgrad auf Level 3 (d. h. hochautomatisiertes Fahren) + Streaming von Musik oder Automatisierungsgrad auf Level 4 (d. h. vollautomatisiertes Fahren)) wird die jeweils erforderliche Rechenleistung ermittelt. Im Falle eines Fahrzeuges, das selbst nur wenig Fahrassistenzfunktionen aufweist, müssen z.B. mehr Daten über die Edge-Nodes zur Verfügung gestellt werden. Zusätzlich wird die eigene Rechenleistung berücksichtigt. Basierend darauf werden mögliche Routen berechnet, die verschiedene Automatisierungsgrade und/oder Anwendungen ermöglichen.

Nach einem besonderen Vorteil der Erfindung können beim Vorschlagen der Routen mobile Edge-Nodes im Rahmen des Edge-Node-Netzwerkes berücksichtigt werden. Durch das Wählen bestimmter Automatisierungsgrade und/oder Anwendungen und/oder Routen kann der Bedarf an mobilen Edge-Nodes ermittelt und diese gezielt zur Verfügung gestellt werden. Bspw. durch Schicken von mobilen Edge-Nodes in Bereiche mit einer geringen Abdeckung durch die Edge-Nodes und/oder mit einem hohen Verkehrsaufkommen. Wählt der Benutzer wiederum eine Route mit einem sehr geringen Automatisierungsgrad und somit wenigen Anwendungen, kann er die Rechenleistung des eigenen Fahrzeuges anderen Netzwerkteilnehmern zu Verfügung stellen und dadurch selbst zumindest zeitweilig zu einem mobilen Edge-Node im Rahmen des Edge-Node-Netzwerkes werden.

Erfindungsgemäß ist vorgesehen, dass im Schritt 1) die mindestens eine Route auf einer Karte (gemeint ist eine geografische Karte) angezeigt wird, die das Straßennetzwerk, die stationären Edge-Nodes und die mobilen Edge-Nodes des Edge-Node-Netzwerks abbildet. Mithilfe einer solchen Karte können die stationären Edge-Nodes und/oder die mobilen Edge-Nodes des Edge-Node-Netzwerks abgebildet werden, die bei der Wahl der Route relevant sein können. Die Karte kann zudem dazu dienen, die Bereiche zu bestimmen, die eine schlechte Abdeckung durch die Edge-Nodes aufweisen, um diese Bereiche nach Wunsch zu umfahren.

Erfindungsgemäß ist weiterhin vorgesehen, dass im Schritt 2) die mindestens eine aktuelle oder prognostizierte Information über die stationären Edge-Nodes und die mobilen Edge-Nodes des Edge-Node-Netzwerks in einem Einzugsbereich des Fahrzeuges und/oder entlang der mindestens einen Route auf der Karte abgebildet wird. Der Einzugsbereich des Fahrzeuges kann durch die Reichweite der Datenübertragung bestimmt werden, über die die Daten zwischen dem Fahrzeug und einem Edge-Node ausgetauscht werden können. Analog kann auch der jeweilige Einzugsbereich der mobilen und/oder stationären Edge-Nodes des Edge-Node-Netzwerkes definiert werden. Auf diese Weise kann ermöglicht werden, dass die Karte nur die stationären und/oder mobilen Edge-Nodes anzeigt, die zeitlich und/oder örtlich zur Auslagerung von Rechenleistung während der Bewegung des Fahrzeuges entlang der Route relevant sein können. Zugleich kann somit der verfügbare Speicherplatz für die Karte nur für relevante Informationen genutzt werden. Denkbar ist ferner, dass die Karte entlang der geplanten Route des Fahrzeuges die stationären und/oder mobilen Edge-Nodes abbilden kann, die voraussichtlich im Einzugsbereich des Fahrzeuges auf der Route des Fahrzeuges sein werden oder umgekehrt in deren Einzugsbereich das Fahrzeug auf seiner Route sein wird. Vorteilhafterweise können die Informationen, die die mobilen Edge-Nodes betreffen, prädiktiv für den Zeitpunkt angezeigt werden, wann das Fahrzeug bei seiner Bewegung in deren Einzugsbereich eintritt. Außerdem kann die Lage der mobilen Edge-Nodes entlang der geplanten Route des Fahrzeuges vorausschauend für den Ort auf der Route angezeigt werden, wo das Fahrzeug in deren Einzugsbereich eintritt. Mit anderen Worten kann die Bewegung des Fahrzeuges und der mobilen Edge-Nodes entlang der geplanten Route des Fahrzeuges koordiniert werden.

Des Weiteren kann die Erfindung bei einem Verfahren zum Navigieren eines Fahrzeuges vorsehen, dass im Schritt 2) der mindestens einen Route mindestens eine der folgenden aktuellen oder prognostizierten Informationen über die stationären Edge-Nodes und über die mobilen Edge-Nodes des Edge-Node-Netzwerks zugeordnet wird:
- Lage,
- Auslastung,
- Einzugsbereich,
- Rechenleistung,
- zeitliche Verfügbarkeit,
- verfügbare Rechenkapazität,
- Zuverlässigkeit,
- Wartezeit.

Durch diese Informationen sind Bereiche, in denen ein Auslagern der Rechenressourcen nur eingeschränkt oder nicht möglich ist, bereits im Vorfeld bekannt. Dies kann beim Vorschlagen der Route entsprechend eingeplant werden.

Zudem kann die Erfindung bei einem Verfahren zum Navigieren eines Fahrzeuges vorsehen, dass im Schritt 2) der mindestens einen Route mindestens eine der folgenden aktuellen oder prognostizierten Informationen über die mobilen Edge-Nodes des Edge-Node-Netzwerks zugeordnet wird:
- voraussichtliche Route,
- voraussichtliche Geschwindigkeit.

Mit anderen Worten können beim Vorschlagen der Route neben den Informationen, die gleichermaßen für die stationären und/oder mobilen Edge-Nodes spezifisch sein können, auch Informationen berücksichtigt werden, die für die mobilen Edge-Nodes von Bedeutung sein können. Daneben können auch Verkehrs- und/oder Navigationsinformationen von Bedeutung sein, um die Präsenz sowie Verfügbarkeit von mobilen Edge-Nodes bestimmen und/oder in Abhängigkeit von der Route des Fahrzeuges vorhersagen zu können.

Außerdem kann die Erfindung bei einem Verfahren zum Navigieren eines Fahrzeuges vorsehen, dass im Schritt 1) die mindestens eine Route vorgeschlagen und/oder priorisiert wird, auf der die Rechenleistung oder ein Teil der Rechenleistung vom Fahrzeug an mindestens einen von den stationären Edge-Nodes und/oder von den mobilen Edge-Nodes des Edge-Node-Netzwerkes für mindestens eine der folgenden Anwendungen ausgelagert werden kann:
- Navigation,
- Streaming,
- Datenverarbeitung,
- Gestenerkennung,
- Auswertung von Sensordaten,
- Fusion von Sensordaten (gemeint sind eigene Sensordaten und Sensordaten anderer Fahrzeuge),
- Berechnung von Fahrmanövern,
- Fahrassistenzfunktionen,
- Fahrmodi gemäß einem von möglichen Automatisierungsgraden beim Betreiben des Fahrzeuges,
- hochautomatisiertes und/oder autonomes Fahren.

Somit können die Serviceleistungen im Rahmen eines Edge-Netzwerkes auf eine vorteilhafte Weise verbessert und erweitert werden. Der Kundenkomfort kann dadurch erheblich erhöht werden.

Ferner kann die Erfindung bei einem Verfahren zum Navigieren eines Fahrzeuges vorsehen, dass im Schritt 1) beim Vorschlagen der mindestens einen Route eine verfügbare eigene Rechenleistung und/oder eine verfügbare Sensorik des Fahrzeuges berücksichtigt wird. In Kenntnis einer verfügbaren eigenen Rechenleistung kann ein Rückschluss auf eine erforderliche zusätzliche Rechenleistung gezogen werden. In Kenntnis einer verfügbaren Sensorik des Fahrzeuges kann ermittelt werden, welche Sensordaten vom Fahrzeug selbst gewonnen werden können und welche Sensordaten bei den anderen Fahrzeugen ggf. über die Edge-Nodes des Edge-Node-Netzwerkes angefragt werden müssen.

Weiterhin kann ein Verfahren im Rahmen der Erfindung mindestens einen weiteren Schritt aufweisen:
3) Zuordnen der mindestens einen Route mindestens einer Anwendung, bei der die Rechenleistung oder ein Teil der Rechenleistung vom Fahrzeug an mindestens einen von den stationären Edge-Nodes und/oder von den mobilen Edge-Nodes des Edge-Node-Netzwerkes entlang der mindestens einen Route ausgelagert werden kann.

Somit kann der Vorteil erreicht werden, dass für jede Route mögliche Anwendungen und/oder Automatisierungsgrade bekannt werden. Somit kann der Benutzer bei der Wahl einer Wunschroute von den vorgeschlagenen Routen bestimmte Routen bevorzugen, die gewünschte Serviceleistungen (Anwendungen und/oder Automatisierungsgrade) ermöglichen.

Des Weiteren kann die Erfindung bei einem Verfahren zum Navigieren eines Fahrzeuges vorsehen, dass im Schritt 1) mehrere Routen auf dem Straßennetzwerk an einen Benutzer des Fahrzeuges vorgeschlagen werden, wobei im Schritt 2) jeder von mehreren Routen mindestens eine Information über die stationären Edge-Nodes und die mobilen Edge-Nodes des Edge-Node-Netzwerks entlang der jeweiligen Route zugeordnet wird. Somit kann der Benutzer zwischen unterschiedlichen möglichen Routen und/oder verfügbaren Serviceleistungen abwägen, bevor er sich für eine bestimmte Route entscheidet.

Zudem kann die Erfindung bei einem Verfahren zum Navigieren eines Fahrzeuges vorsehen, dass in einem weiteren Schritt 4) dem Benutzer des Fahrzeuges angeboten wird, eine von den mehreren Routen in Abhängigkeit von mindestens einer gewünschten Anwendung auszuwählen. Somit kann der Kundenkomfort erhöht werden.

Außerdem ist es im Rahmen eines Verfahrens zum Navigieren eines Fahrzeuges denkbar, dass der Benutzer für bestimmte Anwendungen (bspw. autonomes Fahren) eine Priorisierung abgeben kann, sodass die Routen automatisch bevorzugt werden, auf denen diese Anwendung möglich ist.

Ferner wird die erfindungsgemäße Aufgabe durch ein Navigationssystem zum Navigieren eines Fahrzeuges in einem Straßennetzwerk gelöst, auf welchem ein Edge-Node-Netzwerk vorgesehen ist, welches mehrere stationäre Edge-Nodes und mehrere mobile Edge-Nodes umfasst, wobei das Fahrzeug dazu ausgeführt ist, eine Rechenleistung an mindestens einen von den stationären Edge-Nodes und/oder von den mobilen Edge-Nodes des Edge-Node-Netzwerkes auszulagern, aufweisend: eine Recheneinheit zum Vorschlagen der mindestens einen Route auf dem Straßennetzwerk an einen Benutzer des Fahrzeuges, wobei die Recheneinheit dazu ausgeführt ist, der mindestens einen Route mindestens eine aktuelle oder prognostizierte Information über die stationären Edge-Nodes und die mobilen Edge-Nodes des Edge-Node-Netzwerks entlang der mindestens einen Route zuzuordnen. Durch das erfindungsgemäße Navigationssystem werden die gleichen Vorteile erreicht, die oben in Verbindung mit dem erfindungsgemäßen Verfahren beschrieben wurden. Auf diese Vorteile wird vorliegend vollumfänglich Bezug genommen.

Weiterhin kann die Erfindung bei einem Navigationssystem vorsehen, dass die Recheneinheit dazu ausgeführt ist, eine eigene Rechenleistung oder ein Teil einer eigenen Rechenleistung aus dem Fahrzeug an mindestens einen von den stationären Edge-Nodes und/oder von den mobilen Edge-Nodes des Edge-Node-Netzwerkes auszulagern. Somit kann durch das Navigationssystem das Auslagern von Rechenleistung aus dem Fahrzeug ermöglicht werden, auch wenn dies zuvor durch die vorhandene Recheneinheiten innerhalb des Fahrzeuges nicht möglich war. Auf diese Weise kann nicht nur ein verbessertes Navigationssystem bereitgestellt werden, sondern auch die Funktionalität innerhalb des Fahrzeuges durch das erfindungsgemäße Navigationssystem erheblich erweitert werden, auch wenn dies zuvor mit den vorhandenen Recheneinheiten und/oder Sensoren des Fahrzeuges nicht möglich war.

Des Weiteren kann die Erfindung bei einem Navigationssystem eine Kommunikationseinheit vorsehen, um Daten an einen Edge-Node zu senden und/oder von einem Edge-Node des Edge-Node-Netzwerks zu empfangen. Die Kommunikationseinheit kann dabei Teil des Navigationssystems sein. Auch ist es denkbar, dass das Navigationssystem eine vorhandene Kommunikationseinheit des Fahrzeuges nutzen kann.

Zudem kann die Erfindung bei einem Navigationssystem eine Speichereinheit vorsehen, in der eine Karte hinterlegt ist, die die mindestens eine aktuelle oder prognostizierte Information über die stationären Edge-Nodes und die mobilen Edge-Nodes des Edge-Node-Netzwerks umfasst. Mithilfe einer solchen Speichereinheit kann ermöglicht werden, dass das Navigationssystem über die Informationen verfügt, die beim Vorschlagen von Routen relevant sein können, bei denen eine Auslagerung von Rechenleistung für bestimmte Anwendungen möglich ist. Mithilfe einer Karte können die stationären Edge-Nodes und die mobilen Edge-Nodes des Edge-Node-Netzwerks abgebildet werden, die aktuell und/oder voraussichtlich in einem Einzugsbereich des Fahrzeuges und/oder entlang einer Route des Fahrzeuges liegen werden. Auf diese Weise kann die Auswahl von passenden stationären und/oder mobilen Edge-Nodes getroffen werden, die die Rechenleistung während der Bewegung des Fahrzeug zuverlässig bereitstellen können. Die Informationen können dabei Lage, Auslastung, Einzugsbereich, Rechenleistung, zeitliche Verfügbarkeit, verfügbare Rechenkapazität, Zuverlässigkeit und/oder Wartezeit der stationären und/oder mobilen Edge-Nodes umfassen. Die Karte kann zudem dazu dienen, die Bereiche zu bestimmen, die eine schlechte Abdeckung durch die Edge-Nodes aufweisen, um diese Bereiche nach Wunsch zu umfahren.

Außerdem kann die Erfindung bei einem Navigationssystem eine Anzeigeeinheit vorsehen, auf der die mindestens eine Route auf einer Karte angezeigt wird, die das Straßennetzwerk, die stationären Edge-Nodes und die mobilen Edge-Nodes des Edge-Node-Netzwerks abbildet. Somit kann die mindestens eine Route visualisiert werden.

Ferner kann die Anzeigeeinheit bei einem Navigationssystem im Rahmen der Erfindung dazu ausgeführt sein, mindestens eine aktuelle oder prognostizierte Information über die stationären Edge-Nodes und die mobilen Edge-Nodes des Edge-Node-Netzwerks entlang der mindestens einen Route auf der Karte abzubilden. Diese Informationen können dem Benutzer bei der Wahl der passenden Route helfen.

Weiterhin kann die Anzeigeeinheit bei einem Navigationssystem im Rahmen der Erfindung dazu ausgeführt sein, mindestens eine Anwendung abzubilden, bei der die Rechenleistung oder ein Teil der Rechenleistung vom Fahrzeug an mindestens einen von den stationären Edge-Nodes und/oder von den mobilen Edge-Nodes des Edge-Node-Netzwerkes entlang der mindestens einen Route ausgelagert werden kann. Somit kann der Benutzer neben den möglichen Routen mögliche Anwendungen auf den entsprechenden Routen sehen. Auf diese Weise kann der Benutzer eine Route von den möglichen Routen in Abhängigkeit von den gewünschten Anwendungen einfach und bequem auswählen.

Bei der Anzeigeeinheit kann es sich um ein Touchdisplay handeln. Vorteilhafterweise kann die Route über eine Touchfunktion der Anzeigeeinheit ausgewählt werden. Ferner ist es denkbar, dass auf der Anzeigeeinheit ein Eingabefeld für gewünschte Anwendungen vorgesehen sein kann. Mithilfe des Eingabefeldes kann der Benutzer seine Präferenzen festlegen, die beim Vorschlagen der Routen automatisch berücksichtigt werden können.

Des Weiteren kann die Recheneinheit im Rahmen eines erfindungsgemäßen Navigationssystems dazu ausgeführt sein, das Fahrzeug als einen mobilen Edge-Node beim Edge-Node-Netzwerk anzumelden und/oder zu identifizieren, um eine eigene Rechenleistung oder ein Teil einer eigenen Rechenleistung aus dem Fahrzeug an externe Netzwerkteilnehmer des Edge-Node-Netzwerks zur Verfügung zu stellen. Auf diese Weise kann das Fahrzeug ein gleichwertiges Teil des Edge-Node-Netzwerkes werden. Auch ist es denkbar, die in dieser Form erbrachte Leistung über ein Anreizsystem zu kompensieren.

Vorteilhafterweise kann das Navigationssystem dazu ausgeführt sein, ein Verfahren auszuführen, welches wie oben beschrieben ablaufen kann.

Weitere, die Erfindung verbessernde Maßnahmen werden nachstehend mit der Beschreibung der bevorzugten Ausführungsbeispiele der Erfindung anhand der Figur näher dargestellt. Dabei können die in den Ansprüchen und in der Beschreibung erwähnten Merkmale jeweils einzeln für sich oder in beliebiger Kombination erfindungswesentlich sein. Dabei ist zu beachten, dass die Figur nur einen beschreibenden Charakter hat und nicht dazu gedacht ist, die Erfindung in irgendeiner Form einzuschränken. Es zeigt:

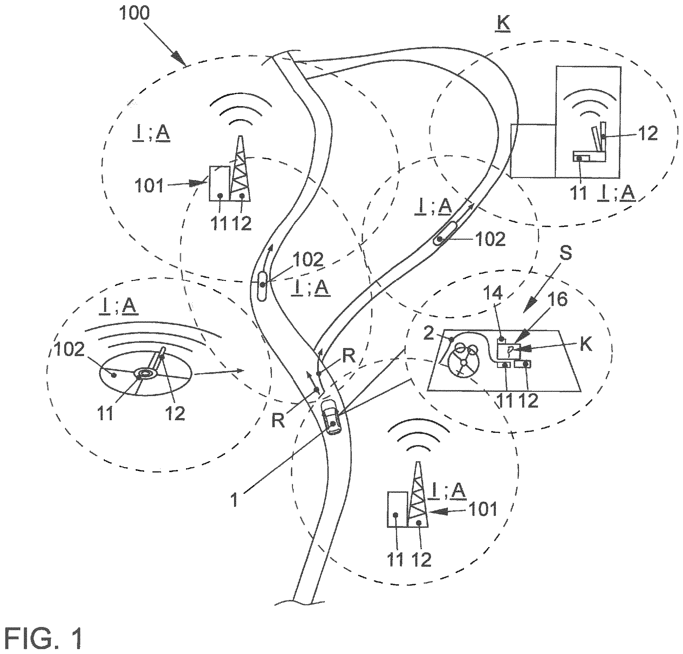

- Fig. 1: eine schematische Darstellung eines erfindungsgemäßen Navigationssystems zum Navigieren eines Fahrzeuges in einem Straßennetzwerk, auf welchem ein Edge-Node-Netzwerk mit mehreren stationären Edge-Nodes und mehreren mobilen Edge-Nodes vorgesehen ist.

Die Figur 1 zeigt ein Straßennetzwerk, auf welchem ein Edge-Node-Netzwerk 100 mit mehreren stationären Edge-Nodes 101 und mehreren mobilen Edge-Nodes 102 vorgesehen sein kann. In diesem Straßennetzwerk kann ein Verfahren zum Navigieren eines Fahrzeuges 1 im Sinne der Erfindung ausgeführt werden. Hierzu kann das Fahrzeug 1 dazu ausgeführt sein, eine Rechenleistung an mindestens einen von den stationären Edge-Nodes 101 und/oder von den mobilen Edge-Nodes 102 des Edge-Node-Netzwerkes 100 auszulagern. Das erfindungsgemäße Verfahren weist dabei folgende Schritte auf:
1) Vorschlagen mindestens einer Route R auf dem Straßennetzwerk an einen Benutzer des Fahrzeuges 1,
2) Zuordnen der mindestens einen Route R mindestens einer aktuellen oder prognostizierten Information I über die stationären Edge-Nodes 101 und die mobilen Edge-Nodes 102 des Edge-Node-Netzwerks 100 entlang der mindestens einen Route R.

Unter einem Edge-Node 101, 102 im Sinne der Erfindung kann ein Rechenknoten eines Edge-Node-Netzwerkes 100 verstanden werden, der ebenfalls über eine Recheneinheit 11, wie z. B. einen Prozessor zur Bereitstellung einer Rechenleistung und eine Kommunikationseinheit 12 zum Austauschen von Daten mit Endgeräten, wie dem erfindungsgemäßen Fahrzeug 1, und/oder anderen Edge-Nodes 101, 102 des Edge-Node-Netzwerkes 100 verfügt. Grundsätzlich kann ein Edge-Node 101, 102 durch einen Computer, bspw. mit einem WLAN-Anschluss bereitgestellt werden. Außerdem ist es denkbar, dass ein stationärer Edge-Node 101 durch eine Basisstation eines Mobilfunkanbieters und/oder eines Netzwerkbetreibers bereitgestellt werden kann.

Das erfindungsgemäße Fahrzeug 1 kann Daten an einen Edge-Node 101, 102 eines Edge-Node-Netzwerkes 100 schicken, um die Daten dort zu verarbeiten, wenn bspw. eine eigene Rechenleistung nicht vorhanden oder nicht ausreichend ist oder anderweitig benutzt wird. Im Rahmen der Erfindung ist es denkbar, dass die Rechenleistung für mindestens eine gewünschte Anwendung ganz oder nur zum Teil ausgelagert wird.

Im Rahmen der Erfindung kann das Edge-Node-Netzwerk 100 neben stationären Edge-Nodes 101 mobile Edge-Nodes 102 aufweisen. Die mobilen Edge-Nodes 102 im Rahmen der Erfindung können bewegt werden. Dabei ist es denkbar, dass die mobilen Edge-Nodes 102 im Sinne der Erfindung flexibel an Orten aufgestellt werden können, wo die Rechenressourcen benötigt werden, bspw. in Zonen mit begrenzter Abdeckung durch die Edge-Nodes 101, 102.

Auch ist es denkbar, dass die mobilen Edge-Nodes 102 im Rahmen der Erfindung sich in Bewegung befinden können, während sie die Rechenleistung an andere Teilnehmer des Edge-Node-Netzwerkes 100 bereitstellen. Als mobile Edge-Nodes 102 im Sinne der Erfindung können vorteilhafterweise Fahrzeuge, bspw. Flottenfahrzeuge, oder Drohnen auftreten. Die Flottenfahrzeuge und/oder Drohnen können gezielt auf die Straßen mit hohem Verkehrsaufkommen geleitet werden, um dort eine hohe Nachfrage an Rechenressourcen befriedigen zu können. Zudem ist es denkbar, dass solche mobilen Edge-Nodes 102 gezielt in Bereiche mit schlechter Abdeckung geleitet werden, wo die Abdeckung mit den Edge-Nodes 101, 102 nicht oder nicht ausreichend erfüllt ist.

Vorteilhafterweise werden beim Auslagern von Rechenleistung aus dem Fahrzeug 1 die mobilen Edge-Nodes 102 des Edge-Node-Netzwerkes 100, wie bspw. andere Fahrzeuge, oder auch andere mobile Systeme, wie bspw. Drohnen, berücksichtigt. D.h., dass die mobilen Edge-Nodes 102 des Edge-Node-Netzwerkes 100 beim Verteilen der Rechenressourcen dynamisch (d.h. zeitlich und/oder örtlich flexibel) eingebunden werden. Die mobilen Edge-Nodes 102 können anhand Ihrer voraussichtlichen Route R und/oder Geschwindigkeit ausgewählt werden. In der Figur 1 sind bspw. als mobile Edge-Nodes 102 andere Fahrzeuge gezeigt. Auch ist in der Figur 1 eine Drohne als ein möglicher mobiler Edge-Node 102 gezeigt.

Während der Bewegung des Fahrzeuges 1 werden unter den mobilen und/oder stationären Edge-Nodes 101, 102 des Edge-Node-Netzwerkes 100 passende Edge-Nodes 101, 102 auf der Route R des Fahrzeuges 1 derart ausgewählt, dass sich das Fahrzeug 1 während der Bewegung stets in einem Einzugsbereich mindestens eines dieser mobilen und/oder stationären Edge-Nodes 101, 102 befindet. Hierzu kann die Route R des Fahrzeuges 1 in Abschnitte unterteilt werden und für jeden Abschnitt ein passender Edge-Node 101, 102 aus dem Edge-Node-Netzwerk 100 ausgewählt werden, sodass die zusätzlichen Rechenressourcen unterbrechungsfrei an das Fahrzeug 1 bereitgestellt werden können.

Unter prognostizierten Informationen I sind im Rahmen der Erfindung prädiktive Informationen I gemeint, die vorausschauend an dem jeweiligen Edge-Node 101, 102 vorliegen werden, wenn das Fahrzeug 1 auf seiner Route R in den Einzugsbereich des jeweiligen Edge-Nodes 101, 102 einfahren wird. Mit anderen Worten wird prädiktiv vorausgesagt, wann sich das Fahrzeug 1 an welchem Punkt der Route R befinden wird und welche Informationen I zu diesem Zeitpunkt an den Edge-Nodes 101, 102 vorliegen werden, welche zu diesem Zeitpunkt voraussichtlich in dem Einzugsbereich des Fahrzeuges 1 liegen werden.

Wie es anhand der Figur 1 zu erkennen ist, werden dem Benutzer des Fahrzeuges 1 in Abhängigkeit von den vorhandenen stationären und/oder mobilen Edge-Nodes 101, 102 des Edge-Node-Netzwerkes 100 verschiedene Routen R vorgeschlagen, die über unterschiedliche Edge-Node-Anwendungen A verfügen können. Beim Vorschlagen der Routen R werden erfindungsgemäß Informationen I über die stationären und/oder mobilen Edge-Nodes 101, 102 des Edge-Node-Netzwerkes 100, wie z. B. Lage, Auslastung, Einzugsbereich, Rechenleistung, zeitliche Verfügbarkeit, verfügbare Rechenkapazität, Zuverlässigkeit, Wartezeit usw. berücksichtigt. Weiterhin können auch Statistiken über die Auslastung der Routen R zu gewissen Zeitpunkten und/oder andere Verkehrsinformationen berücksichtigt werden. Beim Vorschlagen der Routen R können zudem eine verfügbare eigene Rechenleistung und/oder Sensorik im Fahrzeug 1 berücksichtigt werden. Im Falle eines Fahrzeuges 1, das selbst nur wenig Fahrassistenzfunktionen aufweist, müssen z.B. mehr Daten über die Edge-Nodes 101, 102 für bestimmte fortgeschrittene Anwendungen A zur Verfügung gestellt werden.

Vorteilhafterweise kann der Fahrer eine Route R von den vorgeschlagenen Routen R wählen, die möglicherweise etwas länger dauert, aber eine geringere Auslastung der Edge Nodes 101, 102 aufweist, sodass ihm dort mehr Anwendungen A über die Edge-Nodes 101, 102 zur Verfügung stehen. Bspw. für automatisch fahrende Fahrzeuge 1 kann es von Vorteil sein, dass zusätzliche Rechenleistung der Edge Nodes 101, 102 zur Verfügung steht, um die für die Auswertung von Sensordaten und die Berechnung von Fahrmanövern hohe Rechenleistungen bereitzustellen. So kann ein Benutzer bspw. eine längere Reisedauer in Kauf nehmen, wenn er dafür vollautomatisiert fahren kann.

Für verschiedene Automatisierungsgrade und/oder weitere Anwendungen A (beispielsweise Automatisierungsgrad auf Level 3 (d. h. hochautomatisiertes Fahren) + Streaming von Musik oder Automatisierungsgrad auf Level 4 (d. h. vollautomatisiertes Fahren)) wird die jeweils erforderliche Rechenleistung ermittelt. Die Automatisierungsgrade können dabei ebenfalls als bestimmte Anwendungen A berücksichtigt werden.

Wählt der Benutzer wiederum eine Route R mit einem sehr geringen Automatisierungsgrad und somit wenigen Anwendungen A, kann er die Rechenleistung des eigenen Fahrzeuges 1 anderen Netzwerkteilnehmern zu Verfügung stellen und dadurch selbst zumindest zeitweilig zu einem mobilen Edge-Node 102 im Rahmen des Edge-Node-Netzwerkes 100 werden.

Die Erfindung kann vorteilhafterweise vorsehen, dass im Schritt 1) die mindestens eine Route R auf einer Karte K angezeigt wird, die das Straßennetzwerk, die stationären Edge-Nodes 101 und die mobilen Edge-Nodes 102 des Edge-Node-Netzwerks 100 abbildet. Die Karte K kann wiederum auf einer Anzeigeeinheit 16 angezeigt werden. Die Anzeigeeinheit 16 kann bspw. im Rahmen eines erfindungsgemäßen Navigationssystems S bereitgestellt werden und/oder eine Anzeigeeinheit 16 im Armaturenbrett 2 des Fahrzeuges 1 sein.

Die aktuellen oder prognostizierten Informationen I über die stationären Edge-Nodes 101 und die mobilen Edge-Nodes 102 des Edge-Node-Netzwerks 100 können vorteilhafterweise in einem Einzugsbereich des Fahrzeuges 1 und/oder entlang der mindestens einen Route R auf der Karte K abgebildet werden. Der Einzugsbereich des Fahrzeuges 1 kann durch die Reichweite der Datenübertragung bestimmt werden, über die die Daten zwischen dem Fahrzeug 1 und einem Edge-Node 101, 102 ausgetauscht werden können. Analog kann auch der jeweilige Einzugsbereich der mobilen und/oder stationären Edge-Nodes 101, 102 des Edge-Node-Netzwerkes 100 definiert werden (s. die gestrichelten Linien in der Figur 1). Auf diese Weise kann ermöglicht werden, dass die Karte K nur die stationären und/oder mobilen Edge-Nodes anzeigt, die zeitlich und/oder örtlich zur Auslagerung von Rechenleistung während der Bewegung des Fahrzeuges 1 entlang der Route R relevant sein können. Zugleich kann somit der verfügbare Speicherplatz für die Karte K nur für relevante Informationen I genutzt werden.

Bei der Auswahl des oder der passenden Edge-Nodes 101, 102 aus dem Edge-Node-Netzwerk 100 können vorteilhafterweise aktuelle oder prognostizierte Informationen I über die Edge-Nodes 101, 102 berücksichtigt werden, wie z. B.:
- Lage,
- Auslastung,
- Einzugsbereich,
- Rechenleistung,
- zeitliche Verfügbarkeit,
- verfügbare Rechenkapazität,
- Zuverlässigkeit und/oder
- Wartezeit.

Wie oben bereits erwähnt, kann die Karte K mindestens eine der folgenden aktuellen oder prognostizierten Informationen I über die mobilen Edge-Nodes 102 des Edge-Node-Netzwerks 100 umfassen, wie z. B.:
- voraussichtliche Route R,
- voraussichtliche Geschwindigkeit.

Vorteilhafterweise kann ein Verfahren im Rahmen der Erfindung vorsehen, dass im Schritt 1) die mindestens eine Route R vorgeschlagen und/oder priorisiert wird, auf der die Rechenleistung oder ein Teil der Rechenleistung vom Fahrzeug 1 an mindestens einen von den stationären Edge-Nodes 101 und/oder von den mobilen Edge-Nodes 102 des Edge-Node-Netzwerkes 100 für mindestens eine der folgenden Anwendungen A ausgelagert werden kann:
- Navigation,
- Streaming,
- Datenverarbeitung,
- Gestenerkennung,
- Auswertung von Sensordaten,
- Fusion von Sensordaten (gemeint sich eigene Sensordaten und Sensordaten anderer Fahrzeuge),
- Berechnung von Fahrmanövern,
- Fahrassistenzfunktionen,
- Fahrmodi gemäß einem von möglichen Automatisierungsgraden beim Betreiben des Fahrzeuges 1,
- hochautomatisiertes und/oder autonomes Fahren.

Somit können Serviceleistungen beim Navigieren des Fahrzeuges 1 nicht nur erheblich erweitert, sondern auch verbessert werden.

Im Rahmen eines Verfahrens im Rahmen der Erfindung kann ein weiterer Schritt vorgesehen sein:
3) Zuordnen der mindestens einen Route R mindestens einer Anwendung A, bei der die Rechenleistung oder ein Teil der Rechenleistung vom Fahrzeug 1 an mindestens einen von den stationären Edge-Nodes 101 und/oder von den mobilen Edge-Nodes 102 des Edge-Node-Netzwerkes 100 entlang der mindestens einen Route R ausgelagert werden kann.

Vorteilhafterweise können im Schritt 1) mehrere Routen R auf dem Straßennetzwerk vorgeschlagen werden, wobei im Schritt 2) jeder von mehreren Routen R mindestens eine Information I über die stationären Edge-Nodes 101 und die mobilen Edge-Nodes 102 des Edge-Node-Netzwerks 100 entlang der jeweiligen Route R zugeordnet wird. Somit kann sich der Benutzer zwischen unterschiedlichen möglichen Routen R und/oder verfügbaren Serviceleistungen auf den unterschiedlichen Routen R entscheiden, um gewünschte Serviceleistungen erhalten zu können.

Dem Benutzer des Fahrzeuges 1 kann zudem angeboten werden, eine von den mehreren Routen R in Abhängigkeit von mindestens einer gewünschten Anwendung A auszuwählen. Hierzu kann sich der Benutzer bspw. der Anzeigeeinheit 16 bedienen, die bspw. als ein Touchdisplay ausgeführt werden und ein Eingabefeld aufweisen kann, um die gewünschten Anwendung A aufnehmen zu können.

Im Rahmen des Verfahren ist es ferner denkbar, dass der Benutzer für bestimmte Anwendungen A (bspw. autonomes Fahren) eine Priorisierung abgeben kann, sodass die Routen R automatisch bevorzugt werden, auf denen diese Anwendung A möglich ist.

Weiterhin ist in der Figur 1 ein erfindungsgemäßes Navigationssystem S zum Navigieren eines Fahrzeuges 1 in einem Straßennetzwerk in einer vergrößerten Darstellung aus dem Fahrzeug 1 gezeigt. Das erfindungsgemäße Navigationssystem S weist dabei eine Recheneinheit 11 zum Vorschlagen der mindestens einen Route R auf, wobei die Recheneinheit 11 dazu ausgeführt ist, der mindestens einen Route R mindestens eine aktuelle oder prognostizierte Information I über die stationären Edge-Nodes 101 und die mobilen Edge-Nodes 102 des Edge-Node-Netzwerks 100 entlang der mindestens einen Route R zuzuordnen.

Zudem kann die Recheneinheit 11 dazu ausgeführt sein, eine eigene Rechenleistung oder ein Teil einer eigenen Rechenleistung aus dem Fahrzeug 1 an mindestens einen von den stationären Edge-Nodes 101 und/oder von den mobilen Edge-Nodes 102 des Edge-Node-Netzwerkes 100 auszulagern.

Außerdem weist das Navigationssystem S eine Kommunikationseinheit 12 auf, um Daten an einen Edge-Node 101, 102 zu senden und/oder von einem Edge-Node 101, 102 des Edge-Node-Netzwerks 100 zu empfangen.

Ferner kann das Navigationssystem S eine Speichereinheit 14 aufweisen, in der die Karte K hinterlegt ist, die die mindestens eine aktuelle oder prognostizierte Information I über die stationären Edge-Nodes 101 und die mobilen Edge-Nodes 102 des Edge-Node-Netzwerks 100 umfasst.

Zudem weist das Navigationssystem S die bereits zuvor erwähnte Anzeigeeinheit 16 auf, auf der die mindestens eine Route R des Fahrzeuges 1 auf der Karte K angezeigt wird. Die Anzeigeeinheit 16 kann außerdem die mindestens eine aktuelle oder prognostizierte Information I über die stationären Edge-Nodes 101 und die mobilen Edge-Nodes 102 des Edge-Node-Netzwerks 100 entlang der mindestens einen Route R auf der Karte K abbilden. Weiterhin kann die Anzeigeeinheit 16 neben den jeweiligen Route R mindestens eine Anwendung A, bei der die Rechenleistung oder ein Teil der Rechenleistung vom Fahrzeug 1 an mindestens einen von den stationären Edge-Nodes 101 und/oder von den mobilen Edge-Nodes 102 des Edge-Node-Netzwerkes 100 entlang der mindestens einen Route R des Fahrzeuges 1 ausgelagert werden kann.

Die Recheneinheit 11 im Rahmen des erfindungsgemäßen Navigationssystems S kann des Weiteren dazu ausgeführt sein, das Fahrzeug 1 als einen mobilen Edge-Node 102 beim Edge-Node-Netzwerk 100 anzumelden und/oder zu identifizieren, um eine eigene Rechenleistung oder ein Teil einer eigenen Rechenleistung aus dem Fahrzeug 1 an externe Netzwerkteilnehmer des Edge-Node-Netzwerks 100 zur Verfügung zu stellen.

Die voranstehende Beschreibung der Figur beschreibt die vorliegende Erfindung ausschließlich im Rahmen von Beispielen. Selbstverständlich können einzelne Merkmale der Ausführungsformen, sofern es technisch sinnvoll ist, im Rahmen des durch die Ansprüche definierten Schutzbereichs frei miteinander kombiniert werden, ohne den Rahmen der Erfindung zu verlassen.

### Bezugszeichenliste

- 1: Fahrzeug
- 2: Armaturenbrett

- 10: Vorrichtung
- 11: Recheneinheit
- 12: Kommunikationseinheit
- 14: Speichereinheit
- 16: Anzeigeeinheit

- 100: Edge-Node-Netzwerk
- 101: stationärer Edge-Node
- 102: mobiler Edge-Node
- 110: Überwachungseinheit

- A: Anwendung
- I: Information
- K: Karte
- R: Route
- S: Navigationssystem

## Patentansprüche

1. Verfahren zum Navigieren eines Fahrzeuges (1) in einem Straßennetzwerk, auf welchem ein Edge-Node-Netzwerk (100) vorgesehen ist, welches mehrere stationäre Edge-Nodes (101) und mehrere mobile Edge-Nodes (102) umfasst,
wobei ein mobiler Edge-Node (102) ein Edge-Node ist, der sich in Bewegung befindet, während er die Rechenleistung bereitstellt,
wobei als ein mobiler Edge-Node (102) ein Fahrzeug, eine Drohne oder eine mobile Basisstation verwendet wird,
wobei ein stationärer Edge-Node (101) ein örtlich stationär aufgestellter Edge-Node oder eine Basisstation eines Netzwerkbetreibers und/oder eines mobilen Funkanbieters ist, wobei das Fahrzeug (1) dazu ausgeführt ist, eine Rechenleistung an mindestens einen von den stationären Edge-Nodes (101) und/oder von den mobilen Edge-Nodes (102) des Edge-Node-Netzwerkes (100) auszulagern,
aufweisend folgende Schritte:
1) Vorschlagen mindestens einer Route (R) auf dem Straßennetzwerk an einen Benutzer des Fahrzeuges (1),
2) Zuordnen der mindestens einen Route (R) mindestens einer aktuellen oder prognostizierten Information (I) über die stationären Edge-Nodes (101) und die mobilen Edge-Nodes (102) des Edge-Node-Netzwerks (100) entlang der mindestens einen Route (R),
wobei im Schritt 1) die mindestens eine Route (R) auf einer Karte (K) angezeigt wird, die das Straßennetzwerk, die stationären Edge-Nodes (101) und die mobilen Edge-Nodes (102) des Edge-Node-Netzwerks (100) abbildet,
und wobei im Schritt 2) die mindestens eine aktuelle oder prognostizierte Information (I) über die stationären Edge-Nodes (101) und die mobilen Edge-Nodes (102) des Edge-Node-Netzwerks (100) in einem Einzugsbereich des Fahrzeuges (1) und/oder entlang der mindestens einen Route (R) auf der Karte (K) abgebildet wird.

2. Verfahren nach Anspruch 1,
**dadurch gekennzeichnet,**
**dass** im Schritt 2) der mindestens einen Route (R) mindestens eine der folgenden aktuellen oder prognostizierten Informationen (I) über die stationären Edge-Nodes (101) und über die mobilen Edge-Nodes (102) des Edge-Node-Netzwerks (100) zugeordnet wird:
- Lage,
- Auslastung,
- Einzugsbereich,
- Rechenleistung,
- zeitliche Verfügbarkeit,
- verfügbare Rechenkapazität,
- Zuverlässigkeit,
- Wartezeit.

3. Verfahren nach einem der vorhergehenden Ansprüche,
**dadurch gekennzeichnet,**
**dass** im Schritt 2) der mindestens einen Route (R) mindestens eine der folgenden aktuellen oder prognostizierten Informationen (I) über die mobilen Edge-Nodes (102) des Edge-Node-Netzwerks (100) zugeordnet wird:
- voraussichtliche Route R,
- voraussichtliche Geschwindigkeit.

4. Verfahren nach einem der vorhergehenden Ansprüche,
**dadurch gekennzeichnet,**
**dass** im Schritt 1) die mindestens eine Route (R) vorgeschlagen und/oder priorisiert wird, auf der die Rechenleistung oder ein Teil der Rechenleistung vom Fahrzeug (1) an mindestens einen von den stationären Edge-Nodes (101) und/oder von den mobilen Edge-Nodes (102) des Edge-Node-Netzwerkes (100) für mindestens eine der folgenden Anwendungen (A) ausgelagert werden kann:
- Navigation,
- Streaming,
- Datenverarbeitung,
- Gestenerkennung,
- Auswertung von Sensordaten,
- Fusion von Sensordaten,
- Berechnung von Fahrmanövern,
- Fahrassistenzfunktionen,
- Fahrmodi gemäß einem von möglichen Automatisierungsgraden beim Betreiben des Fahrzeuges (1),
- hochautomatisiertes und/oder autonomes Fahren.

5. Verfahren nach einem der vorhergehenden Ansprüche,
**dadurch gekennzeichnet,**
**dass** im Schritt 1) beim Vorschlagen der mindestens einen Route (R) eine verfügbare eigene Rechenleistung und/oder eine verfügbare Sensorik des Fahrzeuges 1 berücksichtigt wird.

6. Verfahren nach einem der vorhergehenden Ansprüche,
**dadurch gekennzeichnet,**
**dass** das Verfahren mindestens einen weiteren Schritt aufweist:
3) Zuordnen der mindestens einen Route (R) mindestens einer Anwendung (A), bei der die Rechenleistung oder ein Teil der Rechenleistung vom Fahrzeug (1) an mindestens einen von den stationären Edge-Nodes (101) und/oder von den mobilen Edge-Nodes (102) des Edge-Node-Netzwerkes (100) entlang der mindestens einen Route (R) ausgelagert werden kann.

7. Verfahren nach einem der vorhergehenden Ansprüche,
**dadurch gekennzeichnet,**
**dass** im Schritt 1) mehrere Routen (R) auf dem Straßennetzwerk an einen Benutzer des Fahrzeuges (1) vorgeschlagen werden, wobei im Schritt (2) jeder von mehreren Routen (R) mindestens eine Information (I) über die stationären Edge-Nodes (101) und die mobilen Edge-Nodes (102) des Edge-Node-Netzwerks (100) entlang der jeweiligen Route (R) zugeordnet wird.

8. Verfahren nach dem vorhergehenden Anspruch,
**dadurch gekennzeichnet,**
**dass** in einem weiteren Schritt 4) dem Benutzer des Fahrzeuges (1) angeboten wird, eine von den mehreren Routen (R) in Abhängigkeit von mindestens einer gewünschten Anwendung (A) auszuwählen.

9. Navigationssystem (S) zum Navigieren eines Fahrzeuges (1) in einem Straßennetzwerk, auf welchem ein Edge-Node-Netzwerk (100) vorgesehen ist, welches mehrere stationäre Edge-Nodes (101) und mehrere mobile Edge-Nodes (102) umfasst,
wobei ein mobiler Edge-Node (102) ein Edge-Node ist, der sich in Bewegung befindet, während er die Rechenleistung bereitstellt,
wobei als ein mobiler Edge-Node (102) ein Fahrzeug, eine Drohne oder eine mobile Basisstation verwendet wird,
wobei ein stationärer Edge-Node (101) ein örtlich stationär aufgestellter Edge-Node oder eine Basisstation eines Netzwerkbetreibers und/oder eines mobilen Funkanbieters ist, wobei das Fahrzeug (1) dazu ausgeführt ist, eine Rechenleistung an mindestens einen von den stationären Edge-Nodes (101) und/oder von den mobilen Edge-Nodes (102) des Edge-Node-Netzwerkes (100) auszulagern,
aufweisend:
eine Recheneinheit (11) zum Vorschlagen mindestens einer Route (R) auf dem Straßennetzwerk an einen Benutzer des Fahrzeuges (1),
wobei die Recheneinheit (11) dazu ausgeführt ist, der mindestens einen Route (R) mindestens eine aktuelle oder prognostizierte Information (I) über die stationären Edge-Nodes (101) und die mobilen Edge-Nodes (102) des Edge-Node-Netzwerks (100) entlang der mindestens einen Route (R) zuzuordnen,
und wobei das Navigationssystem (S) dazu ausgeführt ist, ein Verfahren nach einem der vorhergehenden Ansprüche 1 bis 8 auszuführen.

10. Navigationssystem (S) nach Anspruch 9,
**dadurch gekennzeichnet,**
**dass** die Recheneinheit (11) dazu ausgeführt ist, eine eigene Rechenleistung oder ein Teil einer eigenen Rechenleistung aus dem Fahrzeug (1) an mindestens einen von den stationären Edge-Nodes (101) und/oder von den mobilen Edge-Nodes (102) des Edge-Node-Netzwerkes (100) auszulagern.

11. Navigationssystem (S) nach Anspruch 9 oder 10,
**dadurch gekennzeichnet,**
**dass** eine Kommunikationseinheit (12) vorgesehen ist, um Daten an einen Edge-Node (101, 102) zu senden und/oder von einem Edge-Node (101, 102) des Edge-Node-Netzwerks (100) zu empfangen.

12. Navigationssystem (S) nach einem der Ansprüche 9 bis 11,
**dadurch gekennzeichnet,**
**dass** eine Speichereinheit (14) vorgesehen ist, in der eine Karte (K) hinterlegt ist, die die mindestens eine aktuelle oder prognostizierte Information (I) über die stationären Edge-Nodes (101) und die mobilen Edge-Nodes (102) des Edge-Node-Netzwerks (100) umfasst.

13. Navigationssystem (S) nach einem der Ansprüche 9 bis 12,
**dadurch gekennzeichnet,**
**dass** eine Anzeigeeinheit (16) vorgesehen ist, auf der die mindestens eine Route (R) auf einer Karte (K) angezeigt wird, die das Straßennetzwerk, die stationären Edge-Nodes (101) und die mobilen Edge-Nodes (102) des Edge-Node-Netzwerks (100) abbildet, und/oder dass die Anzeigeeinheit (16) dazu ausgeführt ist, mindestens eine aktuelle oder prognostizierte Information (I) über die stationären Edge-Nodes (101) und die mobilen Edge-Nodes (102) des Edge-Node-Netzwerks (100) entlang der mindestens einen Route (R) auf der Karte (K) abzubilden,
und/oder dass die Anzeigeeinheit (16) dazu ausgeführt ist, mindestens eine Anwendung (A) abzubilden, bei der die Rechenleistung oder ein Teil der Rechenleistung vom Fahrzeug (1) an mindestens einen von den stationären Edge-Nodes (101) und/oder von den mobilen Edge-Nodes (102) des Edge-Node-Netzwerkes (100) entlang der mindestens einen Route (R) ausgelagert werden kann.

14. Navigationssystem (S) nach einem der Ansprüche 9 bis 13,
**dadurch gekennzeichnet,**
**dass** die Recheneinheit (11) dazu ausgeführt ist, das Fahrzeug (1) als einen mobilen Edge-Node (102) beim Edge-Node-Netzwerk (100) anzumelden und/oder zu identifizieren, um eine eigene Rechenleistung oder ein Teil einer eigenen Rechenleistung aus dem Fahrzeug (1) an externe Netzwerkteilnehmer des Edge-Node-Netzwerks (100) zur Verfügung zu stellen.

## Claims

1. Method for navigating a vehicle (1) in a road network in which an edge node network (100) comprising a plurality of stationary edge nodes (101) and a plurality of mobile edge nodes (102) is provided,
wherein a mobile edge node (102) is an edge node which is moving while it provides the computing power,
wherein a vehicle, a drone or a mobile base station is used as a mobile edge node (102),
wherein a stationary edge node (101) is an edge node set up locally in a stationary manner or a base station belonging to a network operator and/or a mobile radio provider,
wherein the vehicle (1) is designed to transfer computing power to at least one of the stationary edge nodes (101) and/or the mobile edge nodes (102) of the edge node network (100),
having the following steps of:
1) suggesting at least one route (R) in the road network to a user of the vehicle (1),
2) assigning, to the at least one route (R), at least one item of current or predicted information (I) relating to the stationary edge nodes (101) and the mobile edge nodes (102) of the edge node network (100) along the at least one route (R),
wherein, in step 1), the at least one route (R) is indicated on a map (K) depicting the road network, the stationary edge nodes (101) and the mobile edge nodes (102) of the edge node network (100),
and wherein, in step 2), the at least one item of current or predicted information (I) relating to the stationary edge nodes (101) and the mobile edge nodes (102) of the edge node network (100) in a catchment area of the vehicle (1) and/or along the at least one route (R) is depicted on the map (K).

2. Method according to Claim 1,
**characterized**
**in that**, in step 2), the at least one route (R) is assigned at least one of the following items of current or predicted information (I) relating to the stationary edge nodes (101) and the mobile edge nodes (102) of the edge node network (100):
- position,
- utilization,
- catchment area,
- computing power,
- temporal availability,
- available computing capacity,
- reliability,
- waiting time.

3. Method according to one of the preceding claims, **characterized**
**in that**, in step 2), the at least one route (R) is assigned at least one of the following items of current or predicted information (I) relating to the mobile edge nodes (102) of the edge node network (100):
- likely route R,
- likely speed.

4. Method according to one of the preceding claims, **characterized**
**in that**, in step 1), the at least one route (R) on which the computing power or part of the computing power can be transferred from the vehicle (1) to at least one of the stationary edge nodes (101) and/or the mobile edge nodes (102) of the edge node network (100) for at least one of the following applications (A) is suggested and/or prioritized:
- navigation,
- streaming,
- data processing,
- gesture recognition,
- evaluation of sensor data,
- fusion of sensor data,
- calculation of driving manoeuvres,
- driving assistance functions,
- driving modes according to one of possible degrees of automation during operation of the vehicle (1),
- highly automated and/or autonomous driving.

5. Method according to one of the preceding claims, **characterized**
**in that**, in step 1), the vehicle's own available computing power and/or an available sensor system of the vehicle 1 is/are taken into account when suggesting the at least one route (R).

6. Method according to one of the preceding claims, **characterized**
**in that** the method has at least one further step of:
3) assigning, to the at least one route (R), at least one application (A) in which the computing power or part of the computing power can be transferred from the vehicle (1) to at least one of the stationary edge nodes (101) and/or the mobile edge nodes (102) of the edge node network (100) along the at least one route (R).

7. Method according to one of the preceding claims, **characterized**
**in that**, in step 1), a plurality of routes (R) in the road network are suggested to a user of the vehicle (1), wherein, in step (2), each of a plurality of routes (R) is assigned at least one item of information (I) relating to the stationary edge nodes (101) and the mobile edge nodes (102) of the edge node network (100) along the respective route (R).

8. Method according to the preceding claim, **characterized**
**in that**, in a further step 4), the user of the vehicle (1) is offered the chance to select one of the plurality of routes (R) on the basis of at least one desired application (A).

9. Navigation system (S) for navigating a vehicle (1) in a road network in which an edge node network (100) comprising a plurality of stationary edge nodes (101) and a plurality of mobile edge nodes (102) is provided,
wherein a mobile edge node (102) is an edge node which is moving while it provides the computing power,
wherein a vehicle, a drone or a mobile base station is used as a mobile edge node (102),
wherein a stationary edge node (101) is an edge node set up locally in a stationary manner or a base station belonging to a network operator and/or a mobile radio provider,
wherein the vehicle (1) is designed to transfer computing power to at least one of the stationary edge nodes (101) and/or the mobile edge nodes (102) of the edge node network (100),
having:
a computing unit (11) for suggesting at least one route (R) in the road network to a user of the vehicle (1),
wherein the computing unit (11) is designed to assign, to the at least one route (R), at least one item of current or predicted information (I) relating to the stationary edge nodes (101) and the mobile edge nodes (102) of the edge node network (100) along the at least one route (R),
and wherein the navigation system (S) is designed to carry out a method according to one of the preceding Claims 1 to 8.

10. Navigation system (S) according to Claim 9, **characterized**
**in that** the computing unit (11) is designed to transfer its own computing power or part of its own computing power from the vehicle (1) to at least one of the stationary edge nodes (101) and/or mobile edge nodes (102) of the edge node network (100).

11. Navigation system (S) according to Claim 9 or 10, **characterized**
**in that** a communication unit (12) is provided in order to transmit data to an edge node (101, 102) and/or to receive data from an edge node (101, 102) of the edge node network (100).

12. Navigation system (S) according to one of Claims 9 to 11,
**characterized**
**in that** a storage unit (14) is provided and stores a map (K) comprising the at least one item of current or predicted information (I) relating to the stationary edge nodes (101) and the mobile edge nodes (102) of the edge node network (100).

13. Navigation system (S) according to one of Claims 9 to 12,
**characterized**
**in that** a display unit (16) is provided, on which the at least one route (R) is displayed on a map (K) depicting the road network, the stationary edge nodes (101) and the mobile edge nodes (102) of the edge node network (100),
and/or in that the display unit (16) is designed to depict at least one item of current or predicted information (I) relating to the stationary edge nodes (101) and the mobile edge nodes (102) of the edge node network (100) along the at least one route (R) on the map (K),
and/or in that the display unit (16) is designed to depict at least one application (A) in which the computing power or part of the computing power can be transferred from the vehicle (1) to at least one of the stationary edge nodes (101) and/or the mobile edge nodes (102) of the edge node network (100) along the at least one route (R).

14. Navigation system (S) according to one of Claims 9 to 13,
**characterized**
**in that** the computing unit (11) is designed to register and/or identify the vehicle (1) as a mobile edge node (102) in the edge node network (100) in order to provide its own computing power or part of its own computing power from the vehicle (1) to external network subscribers of the edge node network (100).

## Revendications

1. Procédé de navigation d'un véhicule (1) dans un réseau routier, sur lequel est prévu un réseau de noeuds périphériques (100), qui comprend plusieurs noeuds périphériques fixes (101) et plusieurs noeuds périphériques mobiles (102),
un noeud périphérique mobile (102) étant un noeud périphérique qui est en mouvement lorsqu'il fournit la puissance de calcul,
un véhicule, un drone ou une station de base mobile étant utilisé(e) comme noeud périphérique mobile (102), un noeud périphérique fixe (101) étant un noeud périphérique localement fixe ou une station de base d'un opérateur de réseau et/ou d'un fournisseur de radio mobile,
le véhicule (1) étant conçu pour transférer la puissance de calcul vers au moins un des noeuds périphériques fixes (101) et/ou des noeuds périphériques mobiles (102) du réseau de noeuds périphériques (100),
le procédé comprenant les étapes suivantes :
1) proposer au moins un itinéraire (R) sur le réseau routier à un utilisateur du véhicule (1),
2) associer l'au moins un itinéraire (R) à au moins une information actuelle ou prédite (I) par le biais des noeuds périphériques fixes (101) et des noeuds périphériques mobiles (102) du réseau de noeuds périphériques (100) le long de l'au moins un itinéraire (R),
à l'étape 1), l'au moins un itinéraire (R) étant affiché sur une carte (K) qui reproduit le réseau routier, les noeuds périphériques fixes (101) et les noeuds périphériques mobiles (102) du réseau de noeuds périphériques (100),
et à l'étape 2), l'au moins une information actuelle ou prédite (I) concernant les noeuds périphériques fixes (101) et les noeuds périphérique mobiles (102) du réseau de noeuds périphériques (100) dans une zone de desserte du véhicule (1) et/ou le long de l'au moins un itinéraire (R) étant reproduite sur la carte (K).

2. Procédé selon la revendication 1,
**caractérisé en ce que**
à l'étape 2), l'au moins un itinéraire (R) étant associé à au moins une des informations actuelles ou prédites (I) suivantes concernant les noeuds périphériques fixes (101) et les noeuds périphériques mobiles (102) du réseau de noeuds périphériques (100):
- emplacement,
- utilisation maximale,
- zone de desserte,
- puissance de calcul,
- disponibilité temporaire,
- capacité de calcul disponible,
- fiabilité,
- temps d'attente.

3. Procédé selon l'une des revendications précédentes,
**caractérisé en ce que**
à l'étape 2 l'au moins un itinéraire (R) est associé à au moins une des informations actuelles ou prédites (I) suivantes concernant les noeuds périphériques mobiles (102) du réseau de noeuds périphériques (100) :
- itinéraire attendu R,
- vitesse attendue.

4. Procédé selon l'une des revendications précédentes,
**caractérisé en ce que**
à l'étape 1), l'au moins un itinéraire (R) est proposé et/ou priorisé sur lequel la puissance de calcul ou une partie de la puissance de calcul du véhicule (1) peut être transférée vers au moins un des noeuds périphériques fixes (101) et/ou des noeuds périphériques mobiles (102) du réseau de noeuds périphériques (100) pour au moins une des applications (A) suivantes :
- navigation,
- transfert en continu,
- traitement de données,
- reconnaissance gestuelle,
- évaluation de données de capteurs,
- fusion de données de capteurs,
- calcul de manoeuvres de conduite,
- fonctions d'aide à la conduite,
- modes de conduite selon un des niveaux d'automatisation possibles pendant le fonctionnement du véhicule (1),
- conduite hautement automatisée et/ou autonome.

5. Procédé selon l'une des revendications précédentes,
**caractérisé en ce que**
à l'étape 1), une puissance de calcul propre disponible et/ou un ensemble de capteurs disponibles du véhicule 1 sont pris en compte lors de la proposition d'au moins un itinéraire (R).

6. Procédé selon l'une des revendications précédentes,
**caractérisé en ce que**
le procédé comporte au moins une étape supplémentaire : 3) associer l'au moins un itinéraire (R) à au moins une application (A) dans laquelle la puissance de calcul ou une partie de la puissance de calcul du véhicule (1) peut être transférée à au moins un des noeuds périphériques fixes (101) et/ou des noeuds périphériques mobiles (102) du réseau de noeuds périphériques (100) le long d'au moins un itinéraire (R) .

7. Procédé selon l'une des revendications précédentes,
**caractérisé en ce que**
à l'étape 1) plusieurs itinéraires (R) sur le réseau routier sont proposés à un utilisateur du véhicule (1), à l'étape (2), chacun des plusieurs itinéraires (R) étant associé à au moins une information (I) concernant les noeuds périphériques fixes (101) et les noeuds périphériques mobiles (102) du réseau de noeuds périphériques (100) du réseau de noeuds périphériques (100) le long de l'itinéraire respectif (R).

8. Procédé selon la revendication précédente, **caractérisé en ce que**
dans une autre étape 4), il est proposé à l'utilisateur du véhicule (1) de sélectionner l'un des plusieurs itinéraires (R) en fonction d'au moins une application souhaitée (A).

9. Système de navigation (S) destiné à la navigation d'un véhicule (1) dans un réseau routier sur lequel est prévu un réseau de noeuds périphériques (100) qui comprend plusieurs noeuds périphériques fixes (101) et plusieurs noeuds périphériques mobiles (102),
un noeud périphérique mobile (102) étant un noeud périphérique qui est en mouvement pendant qu'il fournit la puissance de calcul,
un véhicule, un drone ou une station de base mobile étant utilisé(e) comme noeud périphérique mobile (102),
un noeud périphérique fixe (101) étant un noeud périphérique localement fixe ou une station de base d'un opérateur de réseau et/ou d'un fournisseur de radio mobile,
le véhicule (1) étant conçu pour transférer la puissance de calcul vers au moins un des noeuds périphériques fixes (101) et/ou des noeuds périphériques mobiles (102) du réseau de noeuds périphériques (100),
ledit système de navigation comportant :
une unité de calcul (11) destinée à proposer au moins un itinéraire (R) sur le réseau routier à un utilisateur du véhicule (1),
l'unité de calcul (11) étant conçue pour associer à l'au moins un itinéraire (R) au moins une information actuelle ou prédite (I) concernant les noeuds périphériques fixes (101) et les noeuds périphériques mobiles (102) du réseau de noeuds périphériques (100) le long dudit au moins un itinéraire (R),
et le système de navigation (S) étant conçu pour mettre en œuvre un procédé selon l'une des revendications précédentes 1 à 8.

10. Système de navigation (S) selon la revendication 9,
**caractérisé en ce que**
l'unité de calcul (11) est conçue pour transférer sa propre puissance de calcul ou une partie de sa propre puissance de calcul du véhicule (1) vers au moins un des noeuds périphériques fixes (101) et/ou des noeuds périphériques mobiles (102) du réseau de noeuds périphériques (100).

11. Système de navigation (S) selon la revendication 9 ou 10,
**caractérisé en ce que**
une unité de communication (12) est prévue pour envoyer des données à un noeud périphérique (101, 102) et/ou pour recevoir des données d'un noeud périphérique (101, 102) du réseau de noeuds périphériques (100).

12. Système de navigation (S) selon l'une des revendications 9 à 11,
**caractérisé en ce que**
une unité de mémorisation (14) est prévue dans laquelle est stockée une carte (K) qui contient l'au moins une information actuelle ou prédite (I) concernant les noeuds périphériques fixes (101) et les noeuds périphériques mobiles (102) du réseau de noeuds périphériques (100).

13. Système de navigation (S) selon l'une des revendications 9 à 12,
**caractérisé en ce que**
une unité d'affichage (16) est prévue sur laquelle l'au moins un itinéraire (R) est affiché sur une carte (K) qui reproduit le réseau routier, les noeuds périphériques fixes (101) et les noeuds périphériques mobiles (102) du réseau de noeuds périphériques (100), et/ou
l'unité d'affichage (16) est conçue pour reproduire sur la carte (K) au moins une information actuelle ou prédite (I) concernant les noeuds périphériques fixes (101) et les noeuds périphériques mobiles (102) du réseau de noeuds périphériques (100) le long de l'au moins un itinéraire (R),
et/ou
l'unité d'affichage (16) est conçue pour reproduire au moins une application (A) dans laquelle la puissance de calcul ou une partie de la puissance de calcul du véhicule (1) peut être transférée vers au moins un des noeuds périphériques fixes (101) et/ou des noeuds périphériques mobiles (102) du réseau de noeuds périphériques (100) le long dudit au moins un itinéraire (R).

14. Système de navigation (S) selon l'une des revendications 9 à 13,
**caractérisé en ce que**
l'unité de calcul (11) est conçue pour déclarer et/ou identifier le véhicule (1) comme noeud périphérique mobile (102) dans le réseau de noeuds périphériques (100) afin de mettre sa propre puissance de calcul ou une partie de sa propre puissance de calcul du véhicule (1) à la disposition de participants externes du réseau de noeuds périphériques (100).
